(19)

Europäisches Patentamt

European Patent Office

Office européen des brevets

(11) **EP 4 109 779 A1**

(12) **EUROPEAN PATENT APPLICATION**

(43) Date of publication:
**28.12.2022 Bulletin 2022/52**

(21) Application number: **22181080.7**

(22) Date of filing: **24.06.2022**

(51) International Patent Classification (IPC):
**H04B 7/06** $^{(2006.01)}$ **H04B 7/08** $^{(2006.01)}$
**H04B 1/40** $^{(2015.01)}$

(52) Cooperative Patent Classification (CPC):
**H04B 7/0617; H04B 1/40; H04B 7/0842;**
**H04B 7/086**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2021 US 202163214522 P**

(71) Applicants:
• **Arizona Board of Regents on behalf of Arizona State University**
  **Scottsdale, AZ 85257-9908 (US)**
• **Airbus (S.A.S.)**
  **31700 Blagnac (FR)**

(72) Inventors:
• **BLISS, Daniel W.**
  **85257-9908 Scottsdale, Arizona (US)**
• **DUTTA, Arindam**
  **85257-9908 Scottsdale, Arizona (US)**
• **GIMENO-MARTIN, Alejandro**
  **31700 Blagnac (FR)**
• **ZIEGLER, Volker**
  **31700 Blagnac (FR)**

(74) Representative: **LKGLOBAL**
  **Lorenz & Kopf PartG mbB Patentanwälte**
  **Brienner Straße 11**
  **80333 München (DE)**

(54) **LOW-POWER HIGH-SPEED COMMUNICATIONS SYSTEMS WITH LARGE PHASED ANTENNA ARRAYS**

(57) Low-power high-speed communications systems with large phased antenna arrays are provided. Phased antenna arrays with strategic beamforming techniques offer higher flexibility, lower production, lower maintenance cost, and efficient use of spectrum for high-speed communications services. A fully digital beamforming architecture offers better flexibility, better calibration, possibility of multiple beams, precise phase, and amplitude and polarization control, but suffers from high power consumption and network cost because of high resolution converters when large arrays are required. This disclosure presents a hierarchical beamforming system with low-resolution converters that can perform as well as standard full-resolution beamforming. With different strategies, embodiments described herein can lower the power consumption per element and reduce the network data rate requirements significantly, thus mitigating a major issue for digital beamformers. It is shown herein that the proposed hierarchical beamforming system is feasible for both SATCOM and millimeter wave band services with large phased antenna arrays.

FIG. 2

EP 4 109 779 A1

## Description

### Field of the Disclosure

The present disclosure relates to next-generation wireless communications, and particularly to communications systems with large antenna arrays.

### Background

Next-generation wireless communications systems require increasingly high data rates to achieve high-capacity communications services. There is an increased requirement of efficient communications system design operating at various radio frequency bands, from the microwave range of frequencies from 12 to 40 gigahertz (GHz) to millimeter band range of frequencies from 60 to 100 GHz. With the increase of new satellites at the constellation of low earth orbit (LEO), medium earth orbit (MEO), and geostationary earth orbit (GEO), there is a larger demand for high-speed satellite communications (SATCOM) systems.

Commercial satellite services primarily use three radio frequency bands: C-band (4-8 GHz), which provides low transmission power over wide geographic areas and generally requires larger ground equipment for reception; L-band (1-2 GHz), which is used for mobile applications, such as maritime and aeronautical communications; and Ku-band (10.7-12.7 and 13-18 GHz), which offers higher transmission power over smaller geographic areas and can be received employing a variety of ground equipment. In addition, satellite operators are now developing applications over the Ka-band (18.1-21.2 and 27.5-31 GHz) frequency bands, which can facilitate high transmissions speed and significant information transfer.

In conventional SATCOM systems, large reflectors or dishes are required for high-speed communications, which are disadvantageous regarding their mechanical complexity, low flexibility, bulkiness and high operation and maintenance costs. This can be replaced by the use of phased antenna arrays, which can be thin, flexible, flat and can be mounted over any shape. Main advantages of antenna arrays over large reflectors are the higher flexibility, multiple beams, conformality, modularity, and a more efficient use of the spectrum.

Commercial high-speed communications services tend to operate at relatively high radio frequency bands towards millimeter wave spectral bands, as seen in high-speed Fifth Generation (5G) communications services. An increasing number of smart devices with wireless services have emerged because of the rapid development of mobile networking and wireless transmission, resulting in high data traffic. In order to support such high demand, the millimeter-wave communication technique, which can use bandwidth beyond the traditional microwave bands, has become a crucial technology for 5G communication services and beyond. Such services require massive arrays to perform accurate high-gain beamforming over the millimeter-wave frequency band. A large number of antenna elements brings extra degrees of freedom for increasing the throughput and considerable beamforming gains for improving coverage.

Strategic beamforming techniques are necessary for efficient use of spectrum, especially when a large number of arrays is required to meet equivalent isotropically radiated power (EIRP) and antenna gain to noise temperature (G/T) requirements. Various beamforming architectures are available and can be broadly classified based on analog, digital, and hybrid processing. While analog and hybrid beamforming approaches are power-efficient, a fully digital beamforming architecture offers better flexibility, better calibration, multi-beam configuration, precise phase, amplitude and polarization control.

Although a fully digital architecture requires a simple radio frequency (RF) front-end circuit, the up-down converters and analog-to-digital converters (ADCs)/digital-to-analog converters (DACs) at each antenna element affect the overall power consumption. Use of high resolution ADCs/DACs increases power dissipation, especially when a large array is required. This results in very large data throughput in digital backend, as high resolution and sampling rate of ADCs dictates the digital interface and processing power requirements. Furthermore, with the use of large array receiver beamformers, all signals are sent to a single accumulation point that requires large number of physical wires, thus increasing the overall network cost. For high-speed services, the on-board data rates at the accumulation point can go up to 10-100 terabytes per second (TB/s).

### Summary

The object of the present invention is solved by the subject-matter of the independent claims; further embodiments are incorporated in the dependent claims.

Low-power high-speed communications systems with large phased antenna arrays are provided. There is an increasing requirement of efficient communications system designs operating at various radio frequency bands, from the satellite frequency ranges from 10 to 40 gigahertz (GHz) to millimeter band range of frequencies from 60 to 100 GHz. Phased antenna arrays with strategic beamforming techniques offer higher flexibility, lower production, lower maintenance cost, and efficient use of spectrum for high speed communications services. A fully digital beamforming architecture offers better flexibility, better calibration, possibility of multiple beams, precise phase, and amplitude and polarization control, but suffers from high power consumption and network cost because of high resolution converters when large arrays are required.

This disclosure presents a hierarchical beamforming system with low-resolution converters that can perform as well as standard full-resolution beamforming. With different strategies, embodiments described herein can lower the power consumption per element and reduce the network data rate requirements significantly, thus mitigating a major issue for digital beamformers. It is shown herein that the proposed hierarchical beamforming system is feasible for both satellite communications (SATCOM) and millimeter wave band services with large phased antenna arrays.

Embodiments described herein use low resolution analog-to-digital converters (ADCs)/digital-to-analog converters (DACs) while meeting the performance required for communications services. Embodiments use adaptive randomized spatial tapering at a transmitter with low-resolution front-end DACs to achieve similar results to a full-resolution system. In addition, embodiments use a hierarchical beamforming approach at a receiver with low resolution front-end ADCs that can almost match the performance of a full-resolution system. Thus, this system can be used for full-duplex, dual-polarized directional conformal/planar antenna arrays, supporting multiple beams for communications in Ku/Ka bands and other millimeter wave frequency bands.

An exemplary embodiment provides a digital beamforming radio frequency device. The device includes an antenna array; a plurality of low-bit converters coupled to the antenna array; and a digital processing circuit coupled to the plurality of low-bit converters and configured to implement hierarchical digital beamforming of signals for the antenna array.

According to a first example of the digital beamforming radio frequency device, the plurality of low-bit converters comprises a plurality of low-bit digital-to-analog converters (DACs).

According to an example, such as an example of the first example of the digital beamforming radio frequency device, the digital processing circuit comprises dithering circuitry to reduce correlated quantization errors among elements of the antenna array.

According to an example of the digital beamforming radio frequency device, such as an example of the first example of the digital beamforming radio frequency device, the digital processing circuit is further configured to apply an adaptive randomized spatial filter to the signals; and to cause the signals to be transmitted by the antenna array.

According to a further example, the plurality of low-bit converters comprises a plurality of low-bit analog-to-digital converters (ADCs).

According to an example, such as an example of the further example of the digital beamforming radio frequency device, the digital processing circuit comprises at least three levels of signal processing, each having a bit depth equal to or greater than a previous level.

According to an example, each of the plurality of low-bit converters is a 4-bit converter or less.

According to an example, each of the plurality of low-bit converters is a 2-bit converter or less.

According to an example, each of the plurality of low-bit converters is a 1-bit converter.

Another exemplary embodiment provides a method of digitally beamforming signals, the method comprising: converting between an analog signal and a low-bit digital signal for an antenna array; and beamforming the low-bit digital signal using a hierarchical logical network.

Another exemplary embodiment provides a radio frequency transceiver. The transceiver includes an analog front end comprising a plurality of DACs and a plurality of ADCs; and processing circuitry coupled to the plurality of DACs and the plurality of ADCs and configured to: digitally beamform first low-bit signals received from the plurality of ADCs; and digitally beamform second low-bit signals transmitted to the plurality of DACs.

According to an aspect, low-power high-speed communications systems with large phased antenna arrays are provided. Phased antenna arrays with strategic beamforming techniques offer higher flexibility, lower production, lower maintenance cost, and efficient use of spectrum for high-speed communications services. A fully digital beamforming architecture offers better flexibility, better calibration, possibility of multiple beams, precise phase, and amplitude and polarization control, but suffers from high power consumption and network cost because of high resolution converters when large arrays are required. This disclosure presents a hierarchical beamforming system with low-resolution converters that can perform as well as standard full-resolution beamforming. With different strategies, embodiments described herein can lower the power consumption per element and reduce the network data rate requirements significantly, thus mitigating a major issue for digital beamformers. It is shown herein that the proposed hierarchical beamforming system is feasible for both SATCOM and millimeter wave band services with large phased antenna arrays.

Those skilled in the art will appreciate the scope of the present disclosure and realize additional aspects thereof after reading the following detailed description of the preferred embodiments in association with the accompanying drawing figures.

## Brief Description of the Drawing Figures

The accompanying drawing figures incorporated in and forming a part of this specification illustrate several aspects of the disclosure, and together with the description serve to explain the principles of the disclosure.

Figure 1A is a graphical representation of an activation pattern of a 50 by 50 element array with randomized tapering.

Figure 1B is a graphical representation of a transmit beamforming performance comparison between a standard taper and the randomized tapering of Figure 1A.

Figure 2 is a schematic block diagram of a fully digital beamforming transmitter front-end architecture according to embodiments described herein.

Figure 3 is a schematic block diagram of a fully digital beamforming receiver front-end architecture according to embodiments described herein.

Figure 4 is a notional representation of a hierarchical beamforming logical network structure according to embodiments described herein.

Figure 5 is a schematic block diagram of a 60 by 60 planar array geometry implementing a hierarchical beamforming logical network with three levels of hierarchy.

Figures 6A-6D are graphical representations of a comparison of results between the hierarchical beamforming of Figure 5 and standard beamforming.

Figures 7A and 7B are graphical representations of an elevation and azimuth beampattern at each hierarchy level of Figure 5.

Figures 8A-8D are graphical representations of hierarchical beamforming results at each hierarchical level for different bit depths, compared against the ideal case.

Figure 9 is a graphical representation of mean data rate as a function of number of hierarchy levels.

Figures 10A and 10B are graphical representations of a beampattern for various levels of hierarchy.

Figures 11A-11D are graphical representations of hierarchical beamforming results for combination factors {24,10,5,3} and {8,10,9,5}.

Figures 12A and 12B are graphical representations of hierarchical beamforming results for combination factors {24,10,5,3}, {25,10,5,3}, {25,8,6,3}, and {30,10,4,3}.

Figure 13A is a schematic block diagram of a conceptual digital implementation of hierarchical beamforming, with processing of a weighted sum at each element.

Figure 13B is a schematic block diagram of a daisy-chained network at each tile for a first hierarchy level with 25 elements for the hierarchical beamforming implementation of Figure 13A.

Figure 13C is a schematic block diagram of a logical network for the hierarchical beamforming implementation of Figure 13A.

Figure 13D is a schematic block diagram of a physical network for the hierarchical beamforming implementation of Figure 13A.

Figure 13E is a schematic block diagram of exemplary tiles for the hierarchical beamforming implementation of Figure 13A.

Figure 14A is a graphical representation of hierarchical azimuth beampatterns at various scanning angles for Ku-band satellite communications (SATCOM) with parameters shown in Table III.

Figure 14B is a graphical representation of hierarchical elevation beampatterns at various scanning angles for Ku-band SATCOM with parameters shown in Table III.

Figure 15A is a graphical representation of hierarchical azimuth beampatterns at various scanning angles for millimeter wave band communications with parameters shown in Table IV.

Figure 15B is a graphical representation of hierarchical elevation beampatterns at various scanning angles for millimeter wave band communications with parameters shown in Table IV.

## Detailed Description

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element such as a layer, region, or substrate is referred to as being "on" or extending "onto" another element, it can be directly on or extend directly onto the other element or intervening elements may also be present. In contrast, when an element is referred to as being "directly on" or extending "directly onto" another element, there are no intervening elements present. Likewise, it will be understood that when an element such as a layer, region, or substrate is referred to as being "over" or extending "over" another element, it can be directly over or extend directly over the other element or intervening elements may also be present. In contrast, when an element is referred to as being "directly over" or extending "directly over" another element, there are no intervening elements present. It will also be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Relative terms such as "below" or "above" or "upper" or "lower" or "horizontal" or "vertical" may be used herein to describe a relationship of one element, layer, or region to another element, layer, or region as illustrated in the Figures. It will be understood that these terms and those discussed above are intended to encompass different orientations of the device in addition to the orientation depicted in the Figures.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Low-power high-speed communications systems with large phased antenna arrays are provided. There is an increasing requirement of efficient communications system designs operating at various radio frequency bands, from the satellite frequency ranges from 10 to 40 gigahertz (GHz) to millimeter band range of frequencies from 60 to 100 GHz. Phased antenna arrays with strategic beamforming techniques offer higher flexibility, lower production, lower maintenance cost, and efficient use of spectrum for high speed communications services. A fully digital beamforming architecture offers better flexibility, better calibration, possibility of multiple beams, precise phase, and amplitude and polarization control, but suffers from high power consumption and network cost because of high resolution converters when large arrays are required.

This disclosure presents a hierarchical beamforming system with low-resolution converters that can perform as well as standard full-resolution beamforming. With different strategies, embodiments described herein can lower the power consumption per element and reduce the network data rate requirements significantly, thus mitigating a major issue for digital beamformers. It is shown herein that the proposed hierarchical beamforming system is feasible for both satellite communications (SATCOM) and millimeter wave band services with large phased antenna arrays.

Embodiments described herein use low resolution analog-to-digital (ADCs) converters/digital-to-analog converters (DACs) while meeting the performance required for communications services. Embodiments use adaptive randomized spatial tapering at a transmitter with low-resolution front-end DACs to achieve similar results to a full-resolution system. In addition, embodiments use a hierarchical beamforming approach at a receiver with low resolution front-end ADCs that can almost match the performance of a full-resolution system. Thus, this system can be used for full-duplex, dual-polarized directional conformal/planar antenna arrays, supporting multiple beams for communications in Ku/Ka bands and other millimeter wave frequency bands.

I. Introduction

This disclosure presents a fully digital beamforming system using low resolution ADCs/DACs while meeting the performance required for target communications services (e.g., SATCOM and millimeter wave). The analog front-end power requirements and back-end data requirements can be effectively addressed for high speed communications systems with large arrays. This system can be used for full-duplex, dual-polarized directional conformal/planar antenna arrays, supporting multiple beams for communications in Ku/Ka bands and other millimeter wave frequency bands.

A fully digital beamforming transmitter system uses adaptive randomized spatial tapering to achieve high performance with low-resolution front-end DACs. A fully digital beamforming receiver system for large arrays uses low resolution ADCs and performs as well as a full resolution system. With a hierarchical receive beamforming approach, both analog front-end power requirements and back-end data requirements can be effectively reduced. The working principle of the hierarchical beamforming approach is described and its performance is analyzed for millimeter wave and SATCOM services.

The effective network data rate requirements can be reduced by strategically choosing a hierarchical structure and bit depths. This system can be used for full-duplex, dual-polarized directional antennas, supporting multiple beams for communications in C, L, Ku, Ka and millimeter wave bands.

The disclosure is organized as follows. Section II discusses the receive beamforming system requirements for narrow beams with correspondingly large gains using a large phased array, and describes the front-end architecture. Section III describes the hierarchical beamforming approach with simulation studies and its digital implementation. Section IV analyzes the beamforming performance for SATCOM and millimeter wave systems.

II. Beamforming System Architecture Requirements

Given a large number of antenna elements, there are multiple possible ways to implement receive beamforming for an electronically steerable array. Traditionally, analog combiners would be used to provide phase or potentially true-time steering. A conversion between analog and digital base-band would occur as a last step for downlink. Because of the dramatic reduction in size, weight, and power (SWaP), and cost of digital components and communications and high flexibility, it seems likely that moving the conversion point of analog to digital closer to the antenna array elements is becoming more cost effective. This section simplistically categorizes potential beamforming approaches as analog, hybrid, and digital and discusses why a fully digital approach is most viable and flexible for such system.

*A. Adaptive Randomized Transmit Spatial Tapering*

In some embodiments, an optimized spatial filter pattern is used to improve beamforming performance at lower resolution. The spatial filter pattern is designed based on turning array elements on and off in a controlled random fashion. The statistics of the randomness of turning on and off elements is determined by the polarization angle, spatial angle and array curvature. Unlike a conventional approach, this method alleviates the linearity requirement of the power amplifiers and thus reduces the overall transmit power consumption. At the same time, this method achieves similar transmit beamforming performance to standard tapering, supporting side-lobe requirements.

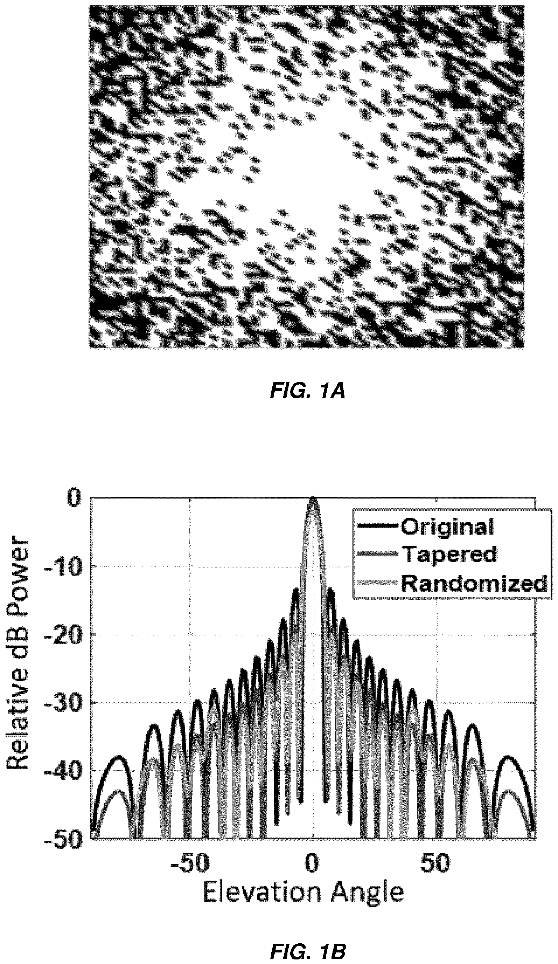

Figure 1A is a graphical representation of an activation pattern of a 50 by 50 element array with randomized tapering. Figure 1B is a graphical representation of a transmit beamforming performance comparison between a standard tapering and the randomized tapering of Figure 1A.

*B. Transmitter Beamforming Architecture*

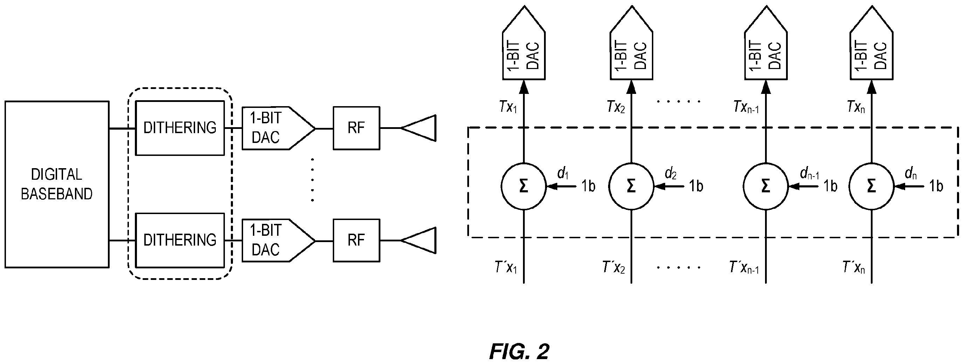

Figure 2 is a schematic block diagram of a fully digital beamforming transmitter front-end architecture according to embodiments described herein. Low bit DACs are deployed for generating transmit beams. Low-bit DACs help significantly reduce power consumption and data throughput. At the transmit side, low-bit DACs can generate large quantization error. A dithering method is used to deal with correlated quantization errors among elements because these errors deteriorate side-lobe performance of the transmit beam. In an exemplary aspect, the dithering method is based on an optimized spatial filter pattern as described above.

*C. Receiver Beamforming Architecture*

For a fully digital downlink operation, there are ADCs associated with each antenna element. The number of converters is dependent upon polarization and in-phase and quadrature channels. For direct conversion, a digital conversion for each in-phase and quadrature (I and Q) channel is required. If only a single polarization is required for each element, then a polarimetric analog combiner could be used to circumvent the need for digital access to multiple polarimetric channels. However, for multiple beams, multiple simultaneous polarizations are required, and additional polarimetric flexibility is necessary. The baseline assumption is that four conversions are required for each element, two for polarization (horizontal/vertical or right-hand circular/left-hand circular) and two for each I and Q channels.

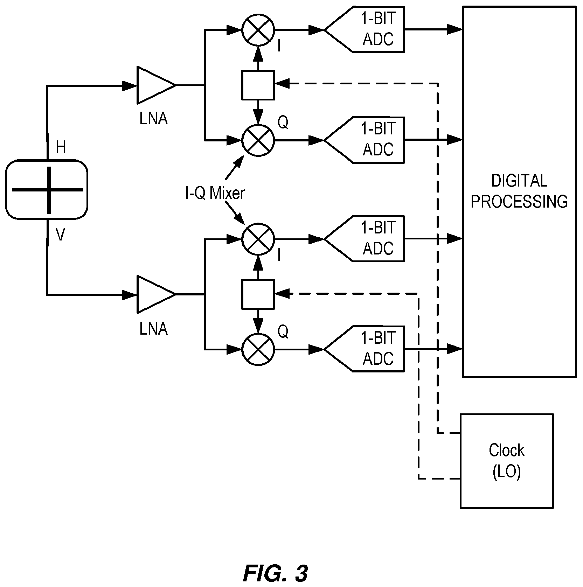

Figure 3 is a schematic block diagram of a fully digital beamforming receiver front-end architecture according to embodiments described herein. The common receiver architecture is shown in with two polarization channels. In this architecture, beamforming and steering are achieved by signal processing techniques which eliminate components such as phase shifters and vector modulators. A fully digital beamforming architecture will only consist of simple radio frequency (RF) frontends, low noise amplifiers (LNAs), 2 IQ-mixers and 2 ADCs per polarization (H and V) for each element as shown in Figure 3. The IQ mixers and ADCs per RX channel drives up the power consumption in the receiver. ADCs are one of the biggest factors for high power consumption and power consumption increases dramatically with the use of high resolution bits of the quantizer. In particular, in the large bandwidth operation at millimeter wave, the ADCs are usually the most power-hungry block and power consumption increases exponentially with the number of bits. Thus, an ideal solution would be to make use of low-resolution ADCs, while meeting the beamforming performance requirements. The next section presents a hierarchical beamforming approach that can almost match the performance of a full resolution system, using low resolution front-end ADCs.

A naive data rate estimate for a receiver is to require at least 8 bits per I and Q receive sample. Continuing the naive network construction with all signals being sent to a single accumulating node, under the assumption of a 50 MHz bandwidth, one beam, and 3600 digitized elements, this would provide a minimum data rate of 2 channels $\times$ 2 polarizations $\times$ 8 bits $\times$ 50 MHz $\times$ 3600 = 5.76 Tb/s that must cross the entire array to a single accumulation point. This becomes infeasible, requiring a large number of physical wires/waveguides, increasing the network cost. Thus, by considering a hierarchical beamforming approach, the network cost can be significantly reduced.

III. Hierarchical Beamforming

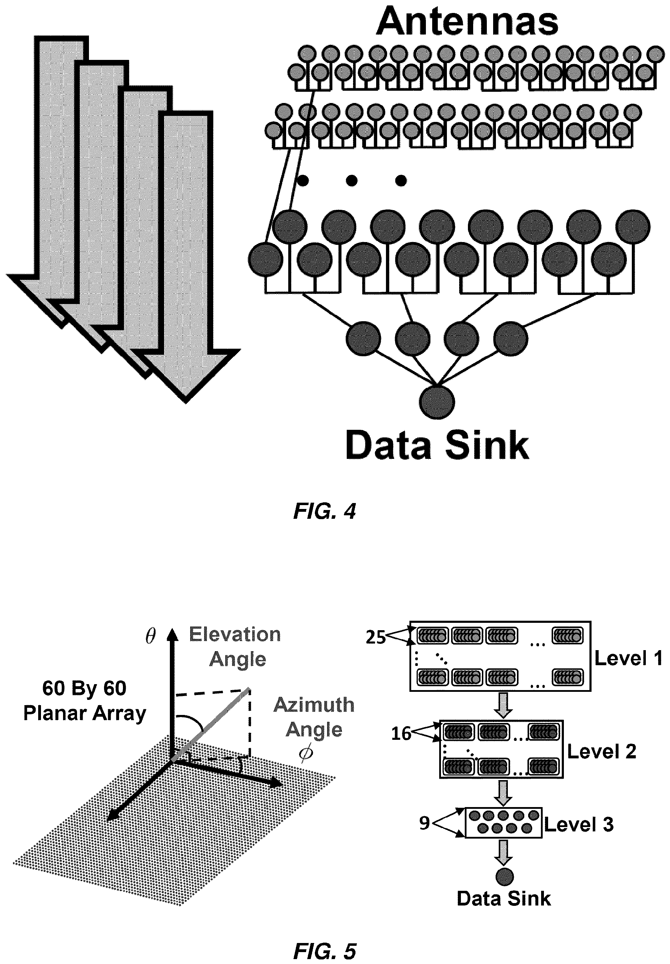

Figure 4 is a notional representation of a hierarchical beamforming logical network structure according to embodiments described herein. Fully digital beamforming with a large number of antenna elements can be supported by using a hierarchical processing and the data-transport architecture. The effective network data rate can be reduced by placing processing elements in groups and choosing bit-depth strategically at each hierarchy level. The combination factors for each hierarchy and the total number of hierarchy levels are also chosen strategically based on the total number of elements and performance requirements.

With digital beamforming, the incoming signal is first digitized from each channel, after which the digitized I-Q sequences are passed to the digital processor. Each I-Q sequence is multiplied with the beamforming coefficient to provide phase rotation and amplitude adjustment. These beamforming coefficients are generally represented as filter banks and are distributed across subarrays. Then the resultant sequence is summed with sequences from other elements from the same hierarchy level. The resultant sums of these sequences from the first hierarchy level are then summed together in groups in the second hierarchy level. This process is repeated until the final IQ data is provided to the data sink. Quantization bit depth is optimized as the required dynamic range increases as signal approaches data sink.

The following subsections show that mathematically and numerically there is no loss between hierarchical and conventional beamforming performance. Optimized bit depth at each hierarchy level leads to a beamforming performance that resembles the near-ideal full resolution performance. The number of hierarchy levels, combination factors and bit-depth at each hierarchy level are the critical parameters that drive the beamforming performance. A detailed analysis of these parameters and a discussion of how these parameters can be optimized based on performance and data rate requirements are provided. It is further shown how the overall power consumption can be reduced by using low resolution ADCs.

*A. Mathematical Formulation*

Assume a classic narrow band signal model, the spatial response can be written as,

$$v(\phi) = e^{i X^T k(\phi)} \qquad \text{Equation 1}$$

where, $v(\phi)$ is the steering vector, $X$ is the sensor location matrix and $k(\phi)$ is the wave number vector.

The conventional beamforming output is given by,

$$\underline{z} = [w \odot v(\phi)]^{\dagger} Z \qquad \text{Equation 2}$$

where Z is the received data matrix and w is a spatial window function.

The *n*-th subarray output at each hierarchical levels can be written in the similar form,

$$\underline{z}_n = v_n(\phi)^{\dagger} Z_n \qquad \text{Equation 3}$$

where, $v_n(\phi)$ are the beamforming weights and $Z_n$ is the received data matrix at the *n*-th subarray.

At the last hierarchical level, all the subarray outputs are combined as follows,

$$\underline{z} = \tilde{v}(\phi)^{\dagger}\tilde{Z} \qquad\qquad \text{Equation 4}$$

where $\tilde{Z} = \left[\underline{z}_1^T, \underline{z}_2^T, \dots \underline{z}_{n_{\text{sub}}}^T\right]^T$, and $\tilde{v}(\phi)$ are the weights at the final output.

In order to show that the hierarchical beamforming output is identical to the conventional beamforming output, the trivial solution can be given by,

$$v(\phi) = \left[v_1^T(\phi), v_2^T(\phi), \dots v_{n_{\text{sub}}}^T(\phi)\right]^T \qquad\qquad \text{Equation 5}$$

$$\tilde{v}(\phi) = 1 \qquad\qquad \text{Equation 6}$$

*B. Simulation Example*

This section provides a numerical example to demonstrate the idea of hierarchical implementation. Figure 5 is a schematic block diagram of a 60 by 60 planar array geometry implementing a hierarchical beamforming logical network with three levels of hierarchy. This geometry is used for simulation, and the beampattern is evaluated at 45 degrees azimuth and elevation. The signal-to-noise ratio (SNR) at each element is assumed to be -10 dB and a bandwidth of 50 MHz is chosen. Three level hierarchies are considered with combining factors 25, 16, 9, respectively, as shown in Figure 5. This means that at the first hierarchy level, groups of 25 elements are summed, thus comprising 144 such groups. Accordingly, groups of 16 secondary level elements are grouped in the second hierarchy level, leaving 9 for the third and last hierarchy level. This example compares the beampattern of the hierarchical beamforming implementation with the standard beamforming approach.

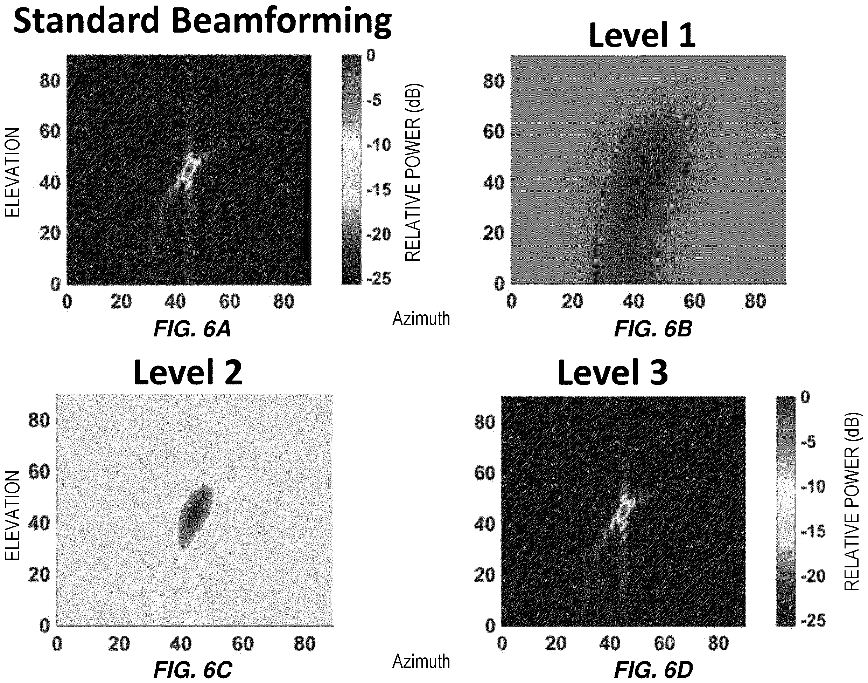

Figures 6A-6D are graphical representations of a comparison of results between the hierarchical beamforming of Figure 5 and standard beamforming. This shows that the hierarchical beamforming result is identical to the standard beamforming result. The beampattern is presented at each hierarchy level and it is shown that the dynamic range and resolution improve with each level.

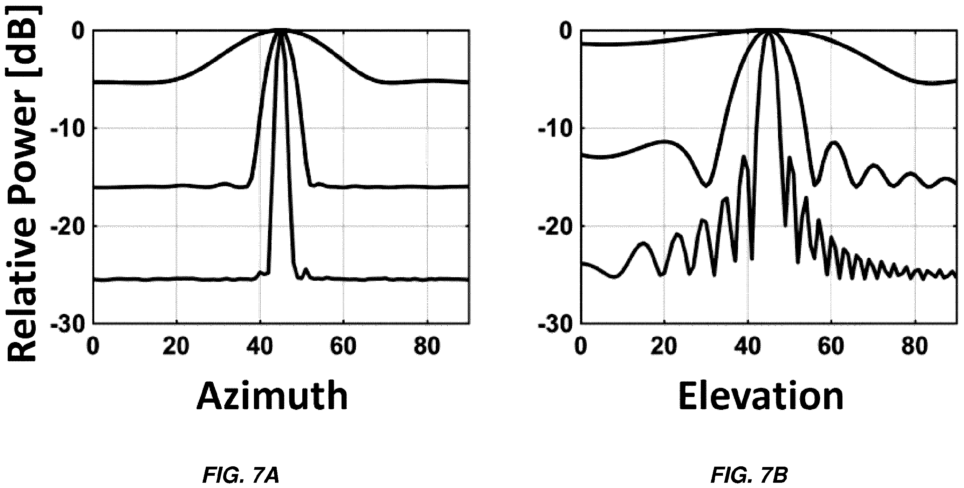

Figures 7A and 7B are graphical representations of an elevation and azimuth beampattern at each hierarchy level of Figure 5. After slicing through the pattern for elevation and azimuth, the corresponding relative power at each hierarchy level can be seen. It is shown that the sidelobe level improves with each hierarchy level.

*C. Hierarchical Bit-depth Analysis*

This section demonstrates the effect of bit depth on beamforming performance. By combining subarray outputs to produce larger subarrays, the load on the network is reduced because the overall data rate is reduced. As antenna elements and then subarrays are combined, the required bit depth per sample increases at each level of the hierarchy. The bit depth at each hierarchical level should be appropriately chosen. The resulting SNR at each hierarchical level increases due to spatial combining, and therefore, the bit depth should be increased at each level. The rule of thumb of determining the bit depth is that the incremental bit depth is approximately equal to the square root of the combining factor as signals are combined quadratically and noise reconstructively.

$$\Delta b_L \approx \min\left\{\text{ceil}\left(\sqrt{C_L}, B_{\max}\right)\right\} \qquad\qquad \text{Equation 7}$$

where $\Delta b_L$ is the increase in bit-depth per hierarchy level, $C_L$ is the combination factor at the hierarchy level and $B_{\max}$ is the chosen upper bound bit-depth based on necessity.

Although the above equation can be used for the hierarchical bit-depth choice, a more conservative choice can be made based on requirements. Here, two examples are shown with three levels of hierarchy. A total of 60 by 60 conformal arrays with combining factors of 25, 16 and 9 were used in this example with -10 dB SNR per element (Figure 5). In the two examples, the initial bit depths, or the ADC bit-resolution are selected as 1 bit and 2 bits, respectively, and the upper bound is set to 10 bits. The effective bit depths were chosen as 6, 10, 10 and 7, 10, 10 respectively.

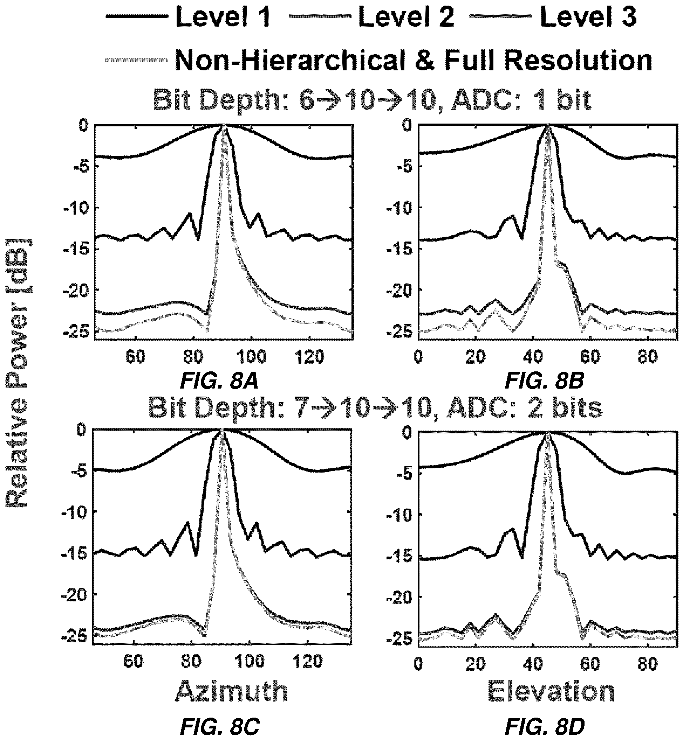

Figures 8A-8D are graphical representations of hierarchical beamforming results at each hierarchical level for different bit depths, compared against the ideal case. This shows that the proposed bit depth schemes are effective as the bit information in a signal is recovered. The beamforming results are close to the ideal full resolution. The sidelobe level in the case of 1-bit ADC is marginally higher than the 2-bit ADC case. It should be noted that the performance can be improved by choosing a high beamforming weight resolution, but a minimum of 3 bits should be used. In this case, 3-bit resolution was used for the beamforming weights for each I-Q channel. Assuming the system supports both polarizations, the data rate at each hierarchy level is calculated (2 (I,Q) $\times$ 2 polarization $\times$ bits $\times$ 50 MHz $\times$ CL) and the network requirements of the baseline design are provided in Table I. Thus, it can be seen that the effective data rate is significantly reduced from the range of 5 Tb/s to 30 Gb/s. Also, with the use of 1-bit ADCs, power consumption at the analog front end is also reduced. This illustrates that a fully digital hierarchical beamforming scheme can significantly reduce power consumption and network cost.

Table I: Data rate and connections required for baseline hierarchical structure design (notional example).

| Hierarchy | Bit Depth | Combining Factors | Combiner Data Rate |
|---|---|---|---|
| 1 | 6 | 25 | 30 Gb/s |
| 2 | 10 | 16 | 32 Gb/s |
| 3 | 10 | 9 | 18 Gb/s |

### D. Choice of Number of Hierarchy Levels

For any SATCOM/millimeter wave system, the primary aim is to lower the effective data rate per element while maintaining the performance of the beamformer as close to full resolution. The effective data rate can be reduced by increasing the number of hierarchy levels. The general idea is to minimize the combination factor as it goes higher up the hierarchy levels. The average data rate is computed for various combination factors, for 3 to 6 levels of hierarchy. Since numerous combination factors are possible for a 60 by 60 array system, one combination factor is computed for each hierarchy level (3-6) systems ({25,18,8}, {24,8,6,3}, {10,6,5,4,3} and {10,6,5,3,2,2}). For this analysis, a 1-bit ADC was used for initial quantization and conservative bit depths (as in Equation 7) were chosen at each hierarchy level.

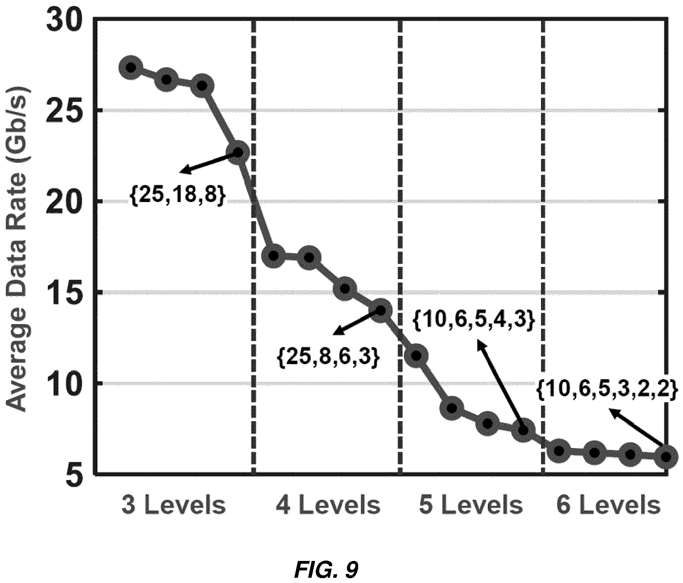

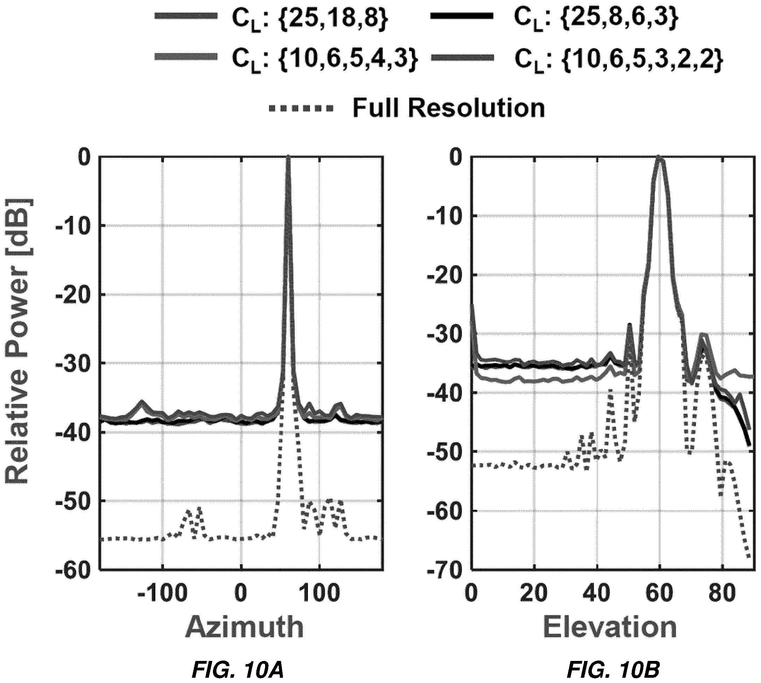

Figure 9 is a graphical representation of mean data rate as a function of number of hierarchy levels. The average data rate can be reduced by increasing the number of hierarchy levels. Figure 9 shows that the mean data rate decreases as the number of levels of hierarchy increases. The performance of the beamformer for these hierarchy levels is then computed, as shown in Figure 10.
Figures 10A and 10B are graphical representations of a beampattern for various levels of hierarchy. The beamformer performance was estimated for the combination factors pointed out in Figure 9 and the peak sidelobe levels were compared. It can be seen that the sidelobe performances are similar. Thus, it can be concluded that implementing higher levels of hierarchy reduces the network data rate requirements, but it can complicate the network design. So, it depends on use-case and design preferences.

### E. Choice of Combination Factors

Many combination factors are possible given the number of hierarchy levels. The combination factors, CL, must be chosen in decreasing order as we go higher up into the hierarchy level, with the highest number of nodes combined in the first level of hierarchy. This not only keeps the effective data rate lower, but also achieves a better beamforming performance. One such example is shown for 60 by 60 array, with four levels of hierarchy.

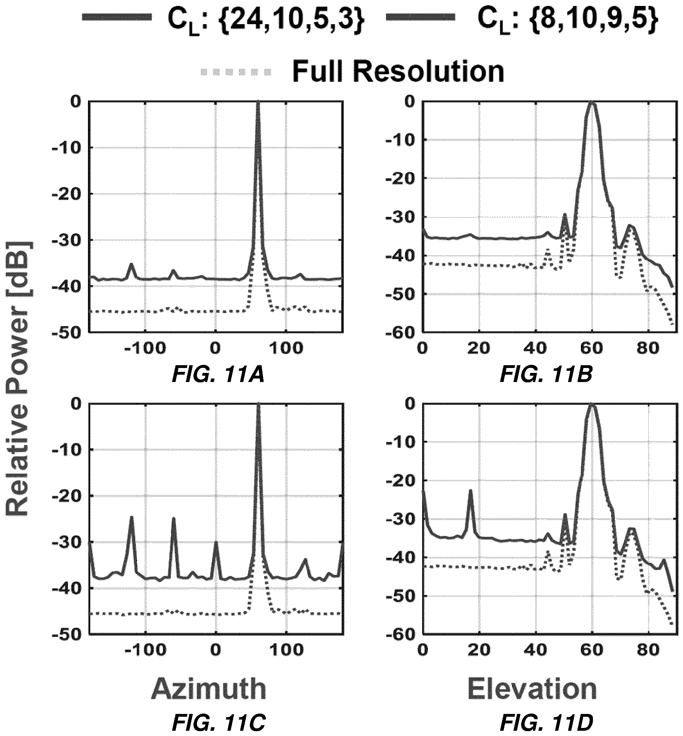

Figures 11A-11D are graphical representations of hierarchical beamforming results for combination factors {24,10,5,3} and {8,10,9,5}. To understand the sidelobe performance, -10 dB SNR per element is used, pointing at 60 degree azimuth and elevation. It is shown that the sidelobe level for hierarchy combinations {8,10,9,5} is much higher than {24,10,5,3}.

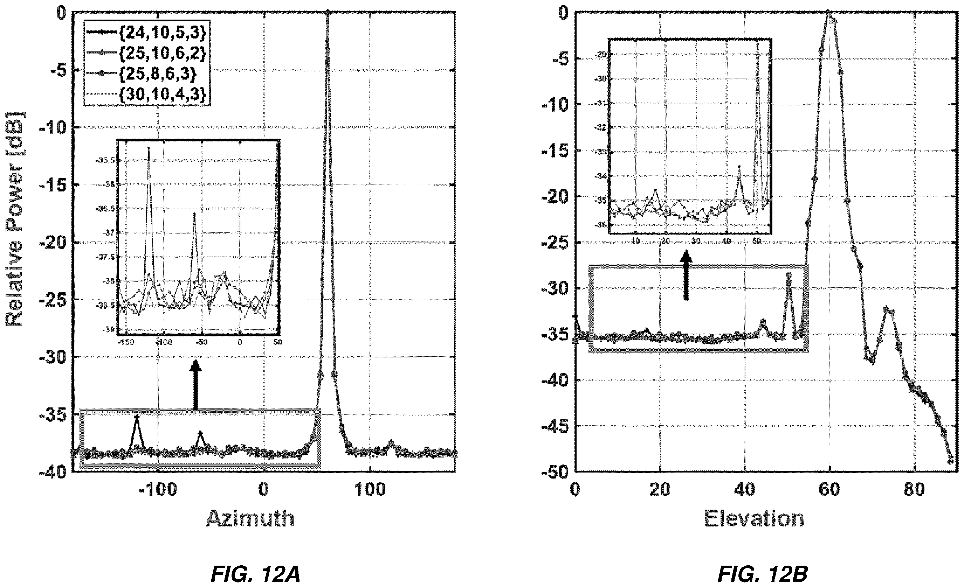

Figures 12A and 12B are graphical representations of hierarchical beamforming results for combination factors {24,10,5,3}, {25,10,5,3}, {25,8,6,3}, and {30,10,4,3}. These four more combination factors that follow the above strategy are compared. It can be seen that all of them show similar sidelobe performances, with combination {24,10,5,3} having a higher sidelobe than the rest.

### F. Hierarchical Beamforming Digital Implementation and Network Geometry

For a large array system, the network geometry is generally scaled using tiles, where each tile can house a fixed number of antenna elements along with the analog front-end processing elements and a digital processor. The major mathematical operation for hierarchical beamforming is weighted addition of signals from each subarray. So, the physical network can be visualized as a single wire going through each subarray and performing low bit weighted addition at each tile, in a daisy-chained fashion.

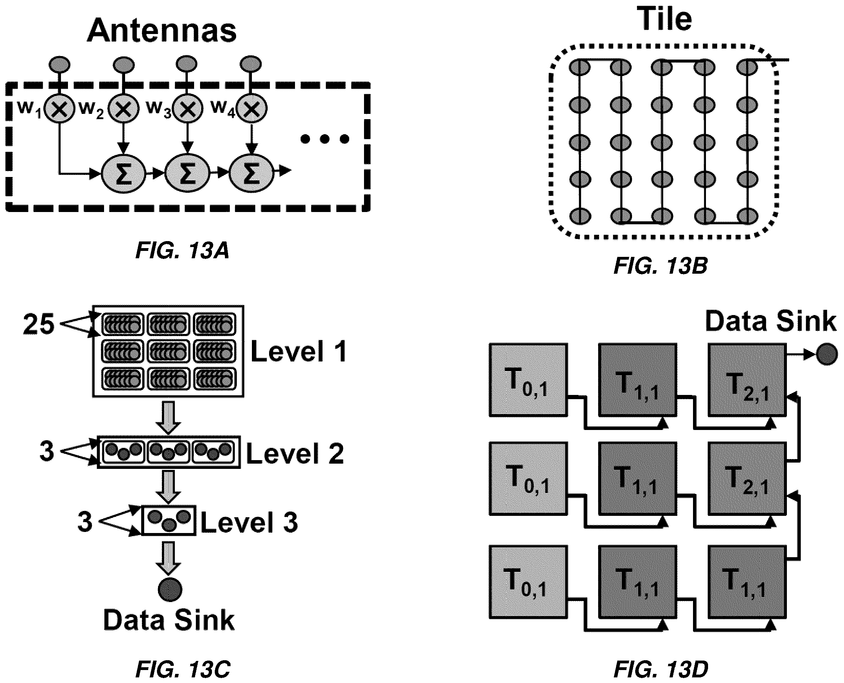

Figures 13A-13E illustrate a three-level hierarchical array network implemented with combination factors 25-3-3. Each tile is composed of 25 antenna elements, making an array system of 225 elements. Figure 13A is a schematic block diagram of a conceptual digital implementation of hierarchical beamforming, with processing of a weighted sum at each element. Here, the beamforming weights are assumed to be 3 bits and the ADC resolution per channel is assumed to be 1 bit. Since 3 bits beamforming weight is multiplied with 1 bit signal, no multiplier is needed. Digital adders based on the hierarchy level bit-depths are required.

Figure 13B is a schematic block diagram of a daisy-chained network at each tile for a first hierarchy level with 25 elements for the hierarchical beamforming implementation of Figure 13A. The weighted addition is performed in a daisy-chained fashion for each IQ and H-V polarization channels. Inside each tile all the 25 elements are combined to implement the first level of hierarchy, while the inter-tile links are used to implement the second and third levels. Figure 13C is a schematic block diagram of a logical network for the hierarchical beamforming implementation of Figure 13A.

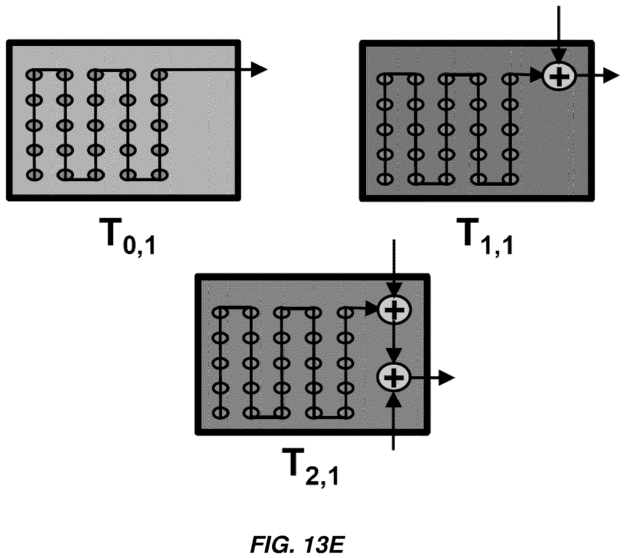

Figure 13D is a schematic block diagram of a physical network for the hierarchical beamforming implementation of Figure 13A. In this example, the 25-3-3 hierarchy is implemented using 9 tiles. The tiles are named based on the number of incoming and outgoing links. So, tile $T_{0,1}$ has one outgoing link and no incoming links. For the first level hierarchy implementation, 24 digital adders are required per channel for 25 antenna elements for all the tiles ($T_{0,1}$, $T_{1,1}$ and $T_{2,1}$), with a resolution of the first level hierarchy bit-depth. Additional adders are required, one for $T_{1,1}$ tiles with second level hierarchy bit-depth, and two for $T_{2,1}$ tiles with second and third level hierarchy bit-depth. Figure 13E is a schematic block diagram of exemplary tiles for the hierarchical beamforming implementation of Figure 13A. This illustrates how the network inside each type of tile may be implemented. The links inside a single tile can be implemented on chip, while the inter-tile links can be implemented externally, using high-speed, short distance interconnects.

The data rate requirements for the incoming and outgoing links for each tile are also computed as shown in Table II. The total number of adders required per tile is also mentioned in the table, which can help estimate the power consumption and area requirement for digital processing. The number of adders per tile is calculated for each I-Q and H-V channels.

Table II: Tile specifications to implement 25-3-3 hierarchical beamforming.

| Tiles | Count | Data Rate In Gb/s | Data Rate Out Gb/s | Number of adders | | |
|---|---|---|---|---|---|---|
| | | | | 6b | 7b | 8b |
| $T_{0,1}$ | 3 | 0 | 30 | 96 | 0 | 0 |
| $T_{1,1}$ | 4 | 30 | 4.2 | 96 | 4 | 0 |
| $T_{2,1}$ | 2 | 30, 4.2 | 4.8 | 96 | 4 | 4 |

IV. Performance Analysis for SATCOM/Millimeter Wave Services

This section simulates some realistic scenarios and estimates the performance of the hierarchical beamforming system with large array. Two cases are presented, one for Ku-band SATCOM with center frequency at 12.5 GHz and a bandwidth of 50 MHz, and one for a millimeter wave band with center frequency at 28 GHz and a bandwidth of 100 MHz.

A. SATCOM Performance Analysis

For the high-speed SATCOM services in Ku band, highly directional antennas are required to point narrow beams with correspondingly large gains at the satellites. Thus, a large array of small antenna elements is used for the simulation. Assuming an SNR of 2 dB per element, a total of 10,000 elements (100 by 100 uniform rectangular array) were used, with half wavelength spacing between elements. The beampattern is simulated at various scanning angles from -60 to 60 degrees azimuth and 0 to 60 degrees elevation. Scanning losses were not considered for the simulation. A five-layer hierarchical beamforming system was simulated with combination factors {25,10,5,4,2}. The parameters used for the simulation are shown in Table III.

Table III: System parameters for a Ku-band hierarchical receiver digital beamforming architecture (notional example)

| Comm Service | Ku-band |
|---|---|
| Center frequency | 12.5 GHz |
| Channel bandwidth | 50 MHz |

(continued)

| Comm Service | Ku-band |
|---|---|
| Number of elements | 10000 (100 by 100 URA) |
| SNR per element | 2 dB |
| Hierarchy levels | 5 |
| Combination factors | {25,10,5,4,2} |
| ADC resolution | 1 bit |
| Bit depths | {3-5-7-8-10} bits |
| Beamforming weight | 3 bits |
| Scanning angles | -60 to 60 degrees azimuth 0 to 60 degrees elevation |
| Max peak sidelobe | -27 dB at -30,30 deg azimuth |
| | -15 dB at 60 deg elevation |
| Max network data rate requirement | 15 Gb/s |

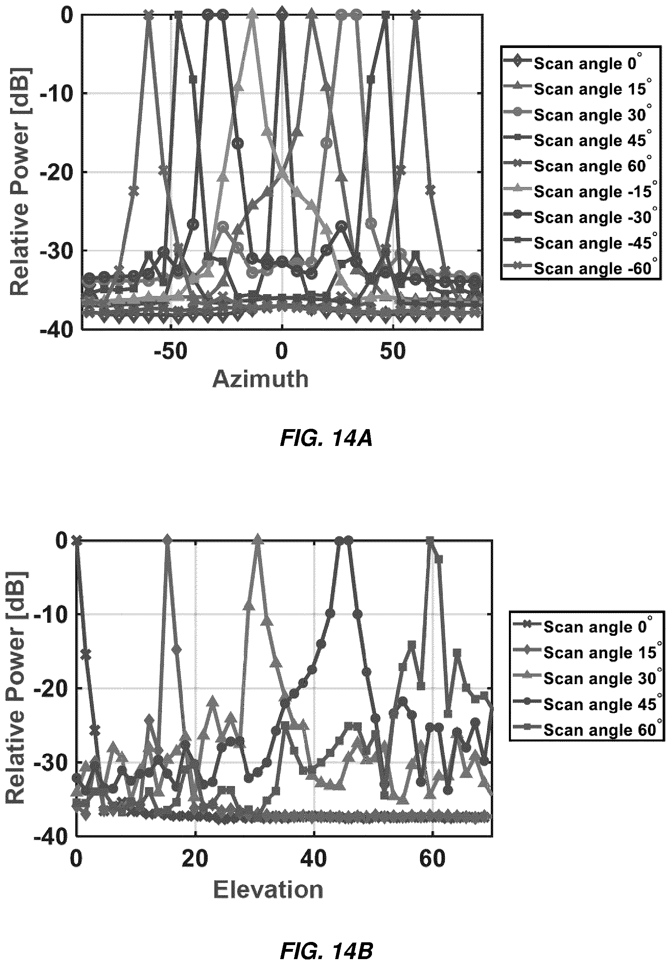

Figure 14A is a graphical representation of hierarchical azimuth beampatterns at various scanning angles for Ku-band SATCOM with parameters shown in Table III. Figure 14B is a graphical representation of hierarchical elevation beampatterns at various scanning angles for Ku-band SATCOM with parameters shown in Table III. For the most part, the peak sidelobe levels are below -30 dB in azimuth and -20 dB in elevation, except at 60-degree elevation, where the peak sidelobe level is around -15 dB. The data rate requirements at each hierarchy level are calculated to be 15, 10, 7, 6.4, and 4 Gb/s respectively. Thus, a maximum data rate requirement for the network is 15 Gb/s.

*B. Millimeter Wave Performance Analysis*

For the high speed millimeter wave services, large antenna arrays give more signal gain which can be used to overpower in the propagation to compensate for penetration losses. For 28 GHz, this implies an antenna with physical antenna area of roughly 3 square inches. Therefore, antenna real-estate on the base station side will clearly not be a problem. It is critical that the antenna be able to scan the beam in order to cover multiple users. Therefore, electronically scanned, electrically large antenna arrays are a requirement for millimeter wave Fifth Generation (5G) communications. Assuming an SNR of 2 dB per element, a total of 1024 elements (32 by 32 uniform rectangular array) were used, with half wavelength spacing between elements. The beampattern is simulated at various scanning angles from -60 to 60 degrees azimuth and 0 to 60 degrees elevation. A five-layer hierarchical beamforming system was simulated with combination factors {32,8,4}. The parameters used for the simulation are shown in Table IV.

Table IV: System parameters for a millimeter wave-band hierarchical receiver digital beamforming architecture (notional example)

| Comm Service | Millimeter wave-band |
|---|---|
| Center frequency | 28 GHz |
| Channel bandwidth | 100 MHz |
| Number of elements | 512 (32 by 16 URA) |
| SNR per element | 2 dB |
| Hierarchy levels | 3 |
| Combination factors | {32,8,4} |
| ADC resolution | 1 bit |
| Bit depths | {3-7-10} bits |
| Beamforming weight | 3 bits |
| Scanning angles | -60 to 60 degrees azimuth 0 to 60 degrees elevation |

(continued)

| Comm Service | Millimeter wave-band |
|---|---|
| Max peak sidelobe | -23 dB at -30 deg azimuth -22 dB at 30 deg elevation |
| Max network data rate requirement | 19.2 Gb/s |

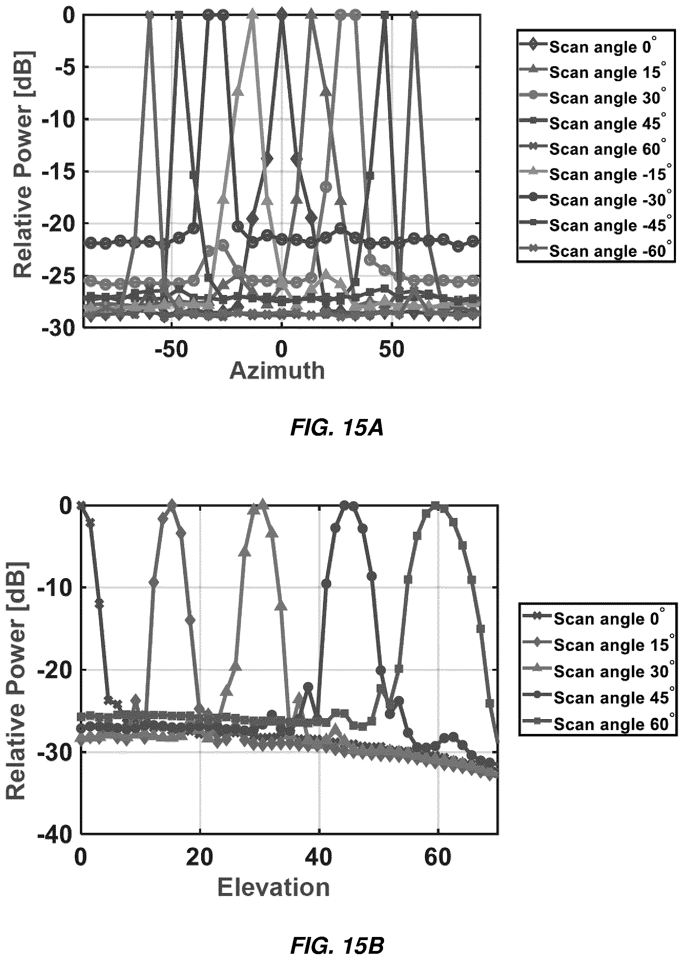

Figure 15A is a graphical representation of hierarchical azimuth beampatterns at various scanning angles for millimeter wave band communications with parameters shown in Table IV. Figure 15B is a graphical representation of hierarchical elevation beampatterns at various scanning angles for millimeter wave band communications with parameters shown in Table IV. The peak sidelobe levels are below -20 dB in both azimuth and elevation. The data rate requirements at each hierarchy level are calculated to be 19.2, 11.2, and Gb/s respectively. Thus, a maximum data rate requirement for the network is 19.2 Gb/s.

Thus, the proposed hierarchical beamforming system is feasible for both SATCOM and millimeter wave band services. Some of the major applications include power efficient, high speed communications services for mobile base stations, aircrafts, spacecrafts, self-driving cars, HDTVs and so on.

Those skilled in the art will recognize improvements and modifications to the preferred embodiments of the present disclosure. All such improvements and modifications are considered within the scope of the concepts disclosed herein and the claims that follow.

**Claims**

1. A digital beamforming radio frequency device, comprising:

   an antenna array;
   a plurality of low-bit converters coupled to the antenna array; and
   a digital processing circuit coupled to the plurality of low-bit converters and configured to implement hierarchical digital beamforming of signals for the antenna array.

2. The digital beamforming radio frequency device of claim 1, wherein the plurality of low-bit converters comprises a plurality of low-bit digital-to-analog converters (DACs).

3. The digital beamforming radio frequency device of claim 1 or 2, wherein the digital processing circuit comprises dithering circuitry to reduce correlated quantization errors among elements of the antenna array.

4. The digital beamforming radio frequency device of claim 1, 2 or 3, wherein the digital processing circuit is further configured to:

   apply an adaptive randomized spatial filter to the signals; and
   cause the signals to be transmitted by the antenna array.

5. The digital beamforming radio frequency device of one of the preceding claims, wherein the plurality of low-bit converters comprises a plurality of low-bit analog-to-digital converters (ADCs).

6. The digital beamforming radio frequency device of one of the preceding claims, wherein the digital processing circuit comprises at least three levels of signal processing, each having a bit depth equal to or greater than a previous level.

7. The digital beamforming radio frequency device of one of the preceding claims, wherein each of the plurality of low-bit converters is a 4-bit converter or less.

8. The digital beamforming radio frequency device of one of the preceding claims, wherein each of the plurality of low-bit converters is a 2-bit converter or less.

9. The digital beamforming radio frequency device of one of the preceding claims, wherein each of the plurality of low-bit converters is a 1-bit converter.

**10.** A method of digitally beamforming signals, the method comprising:

converting between an analog signal and a low-bit digital signal for an antenna array; and
beamforming the low-bit digital signal using a hierarchical logical network.

**11.** A radio frequency transceiver, comprising:

an analog front end comprising a plurality of digital-to-analog converters (DACs) and a plurality of analog-to-digital converters (ADCs); and
processing circuitry coupled to the plurality of DACs and the plurality of ADCs and configured to:

digitally beamform first low-bit signals received from the plurality of ADCs; and
digitally beamform second low-bit signals transmitted to the plurality of DACs.

*FIG. 1A*

*FIG. 1B*

*FIG. 2*

FIG. 3

# Antennas

# Data Sink

*FIG. 4*

Elevation Angle

Azimuth Angle $\phi$

60 By 60 Planar Array

25 — Level 1

16 — Level 2

9 — Level 3

Data Sink

*FIG. 5*

*FIG. 7A*

*FIG. 7B*

EP 4 109 779 A1

FIG. 8A

FIG. 8B

FIG. 8C

FIG. 8D

FIG. 9

$C_L$: {25,18,8}   $C_L$: {25,8,6,3}

$C_L$: {10,6,5,4,3}   $C_L$: {10,6,5,3,2,2}

••••• Full Resolution

*FIG. 10A*   *FIG. 10B*

EP 4 109 779 A1

FIG. 11A

FIG. 11B

Relative Power [dB]

Azimuth

FIG. 11C

Elevation

FIG. 11D

$C_L$: {24,10,5,3}    $C_L$: {8,10,9,5}

Full Resolution

FIG. 12A

FIG. 12B

FIG. 13B

FIG. 13D

FIG. 13A

FIG. 13C

25

FIG. 13E

*FIG. 14A*

*FIG. 14B*

*FIG. 15A*

*FIG. 15B*

Europäisches
Patentamt

European
Patent Office

Office européen
des brevets

# EUROPEAN SEARCH REPORT

Application Number

EP 22 18 1080

## DOCUMENTS CONSIDERED TO BE RELEVANT

| Category | Citation of document with indication, where appropriate, of relevant passages | Relevant to claim |
|---|---|---|
| X | EP 3 164 949 A1 (ERICSSON TELEFON AB L M (PUBL) [SE]) 10 May 2017 (2017-05-10) | 1,10 |
| Y | * the whole document * | 2-9 |
| X | WO 2020/263142 A1 (ERICSSON TELEFON AB L M [SE]) 30 December 2020 (2020-12-30) | 11 |
| Y | * the whole document * | 2-9 |
| Y | ROTH KILIAN ET AL: "A Comparison of Hybrid Beamforming and Digital Beamforming With Low-Resolution ADCs for Multiple Users and Imperfect CSI", IEEE JOURNAL OF SELECTED TOPICS IN SIGNAL PROCESSING, IEEE, US, vol. 12, no. 3, 1 June 2018 (2018-06-01), pages 484-498, XP011684362, ISSN: 1932-4553, DOI: 10.1109/JSTSP.2018.2813973 [retrieved on 2018-05-30] * the whole document * | 2-9 |

**CLASSIFICATION OF THE APPLICATION (IPC)**

INV.
H04B7/06
H04B7/08
H04B1/40

**TECHNICAL FIELDS SEARCHED (IPC)**

H04B

The present search report has been drawn up for all claims

| Place of search | Date of completion of the search | Examiner |
|---|---|---|
| Munich | 15 November 2022 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 1080

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2022

| Patent document cited in search report | | Publication date | Patent family member(s) | | Publication date |
|---|---|---|---|---|---|
| EP 3164949 | A1 | 10-05-2017 | EP | 3164949 A1 | 10-05-2017 |
| | | | US | 2015365151 A1 | 17-12-2015 |
| | | | US | 2017012679 A1 | 12-01-2017 |
| | | | WO | 2015188894 A1 | 17-12-2015 |
| WO 2020263142 | A1 | 30-12-2020 | EP | 3991307 A1 | 04-05-2022 |
| | | | US | 2022271786 A1 | 25-08-2022 |
| | | | WO | 2020263142 A1 | 30-12-2020 |

EPO FORM P0459

For more details about this annex : see Official Journal of the European Patent Office, No. 12/82